(19) Europäisches Patentamt
European Patent Office
Office européen des brevets

(11) **EP 4 714 787 A1**

(12) **EUROPEAN PATENT APPLICATION**
published in accordance with Art. 153(4) EPC

(43) Date of publication:
**25.03.2026   Bulletin 2026/13**

(51) International Patent Classification (IPC):
**B62D 6/00** *(2006.01)*      **B62D 5/04** *(2006.01)*
**B62D 101/00** *(2006.01)*      **B62D 119/00** *(2006.01)*

(21) Application number: 23937459.8

(22) Date of filing: **16.05.2023**

(52) Cooperative Patent Classification (CPC):
**B62D 5/0463**

(86) International application number:
**PCT/JP2023/018191**

(87) International publication number:
**WO 2024/236716 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Mitsubishi Electric Mobility
Corporation
Tokyo 100-8310 (JP)**

(72) Inventors:
• **TANAKA, Kenta
Tokyo 100-8310 (JP)**

• **NATSUHARA, Hiroya
Tokyo 100-8310 (JP)**
• **IKEGAME, Toru
Tokyo 100-8310 (JP)**
• **KEZOBO, Isao
Tokyo 100-8310 (JP)**
• **MASUI, Ryota
Tokyo 100-8310 (JP)**
• **MATSUSHITA, Masaki
Tokyo 100-8310 (JP)**

(74) Representative: **Hoffmann Eitle
Patent- und Rechtsanwälte PartmbB
Arabellastraße 30
81925 München (DE)**

(54) **CONTROL DEVICE FOR ELECTRIC POWER STEERING, ELECTRIC POWER STEERING DEVICE, VEHICLE, AND ELECTRIC POWER STEERING CONTROL SYSTEM**

(57)   An electric power steering control device that controls output torque of a motor, which outputs assist torque based on a steering torque signal from a torque sensor that determines steering torque applied to a steering wheel by a user, controls the output torque by using, as a current command corresponding to a command value of the output torque, a signal obtained by adding a correction signal obtained by causing the steering torque signal to pass through a second compensator to an assist torque signal approximately proportional to a compensated steering torque signal obtained by causing the steering torque signal to pass through a first compensator, and in each of the first compensator and the second compensator, at least two or more stages of low-order filters of which an order is 1 or 2 are connected in series.

FIG. 2

EP 4 714 787 A1

**Description**

TECHNICAL FIELD

The present disclosure relates to an electric power steering control device, an electric power steering device, a vehicle, and an electric power steering control system.

BACKGROUND ART

In an electric power steering device that applies assist torque by a motor in correspondence with steering torque applied to a steering wheel by a user (that is, a driver) of a vehicle such as an automobile, assist torque approximately proportional to the steering torque is determined, and a driver's steering force is reduced by setting a torque proportional gain, which is an amplification factor of the proportional relationship, to be large, and vibration such as oscillation of a control system which is generated with an increase in the torque proportional gain is suppressed to improve driver's feeling.

For example, Patent Documents 1 to 3 disclose examples of control of electric power steering devices in the related art. Patent Document 1 discloses an example in which output torque of a motor is controlled by using a result, which is obtained by adding both a signal of a series path that is a result of multiplying a signal obtained by causing a steering torque determination value to pass through a first compensator by a torque proportional gain and a signal of a parallel path obtained by causing the steering torque determination value to pass through a second compensator, as a command value of assist torque. In addition, Patent Document 2 discloses, as a compensator of a parallel path, a configuration in which compensators in which a maximum order of a denominator polynomial and a numerator polynomial is 1 are connected in series in a plurality of stages. In addition, Patent Document 3 discloses, as a compensator of a series path, a configuration in which a compensator in which a maximum order of a denominator polynomial and a numerator polynomial is 2 is disposed.

Citation List

Patent Documents

Patent Document 1: Japanese Patent No. 5642272
Patent Document 2: Japanese Patent No. 5160663
Patent Document 3: Japanese Patent No. 4412006

SUMMARY OF INVENTION

Technical Problem

In recent years, due to an increase in size and electrification of the vehicle type to which the electric power steering device is applied, vehicles tend to be heavier. In order to apply the electric power steering to these vehicle types, it is necessary to increase a gradient of an assist map representing an assist amount with respect to steering by a user (driver), that is, a torque proportional gain.

However, in Patent Document 1, since a specific structure of the compensators of the series path and the parallel path is not shown, it is unclear whether performance required for increasing the gradient of the assist map can be realized. In addition, in Patent Document 2 and Patent Document 3, specific examples of the compensator are shown, but the compensator is applied only to any one of the series path or the parallel path, and the degree of freedom of a controller is low. Therefore, there is a problem that the performance cannot be maximized and there is an upper limit on the gradient of the assist map that can be realized. Therefore, it has been difficult to apply the electric power steering to large vehicle types.

The present disclosure has been made in view of the above circumstances, and an object thereof is to provide an electric power steering control device, an electric power steering device, a vehicle, and an electric power steering control system capable of applying the electric power steering even to a large vehicle type.

Solution to Problem

An electric power steering control device according to the present disclosure is an electric power steering control device configured to control output torque of a motor configured to output assist torque based on a steering torque signal from a torque sensor configured to determine steering torque applied to a steering wheel by a user, in which the output torque is controlled by using, as a current command corresponding to a command value of the output torque, a signal obtained by adding a correction signal obtained by causing the steering torque signal to pass through a second compensator to an assist torque signal approximately proportional to a compensated steering torque signal obtained by causing the steering torque signal to pass through a first compensator, and in each of the first compensator and the second compensator, at least two or more stages of low-order filters of which an order is 1 or 2 are connected in series.

An electric power steering control device according to the present disclosure is an electric power steering control device configured to control output torque of a motor configured to output assist torque based on a steering torque signal from a torque sensor configured to determine steering torque applied to a steering wheel by a user and a motor speed signal, in which the output torque is controlled by using, as a current command corresponding to a command value of the output torque, a signal obtained by adding a combined correction signal, which is an addition result between a torque-based correction signal obtained by causing the steering torque signal to pass through a second compensator and a motor speed-based correction signal obtained by causing the motor speed signal to pass through a fourth compensator, to an assist torque signal approximately proportional to a signal for assist torque calculation that is an addition result between a compensated steering torque signal obtained by causing the steering torque signal to pass through a first compensator and a compensated motor speed signal obtained by causing the motor speed signal to pass through a third compensator, and in each of the first compensator, the second compensator, the third compensator, and the fourth compensator, at least two or more stages of low-order filters of which an order is 1 or 2 are connected in series.

An electric power steering device according to the present disclosure includes: a torque sensor configured to determine the steering torque applied to a steering wheel by a user; and the electric power steering control device, in which the output torque is controlled by the electric power steering control device based on the steering torque determined by the torque sensor.

A vehicle according to the present disclosure includes: a vehicle speed determination unit configured to determine a speed of the vehicle; and the electric power steering device in which the output torque is controlled based on the vehicle speed determined by the vehicle speed determination unit and the steering torque.

An electric power steering control system according to the present disclosure is an electric power steering control system including: a steering wheel; a motor configured to output assist torque based on a steering torque signal from a torque sensor configured to determine steering torque applied to the steering wheel by a user; and a control device configured to control output torque of the motor, in which the control device controls the output torque by using, as a current command corresponding to a command value of the output torque, a signal obtained by adding a correction signal obtained by causing the steering torque signal to pass through a second compensator to an assist torque signal approximately proportional to a compensated steering torque signal obtained by causing the steering torque signal to pass through a first compensator, and in each of the first compensator and the second compensator, at least two or more stages of low-order filters of which an order is 1 or 2 are connected in series.

An electric power steering control system according to the present disclosure is an electric power steering control system including: a steering wheel; a motor configured to output assist torque based on a steering torque signal from a torque sensor configured to determine steering torque applied to the steering wheel by a user and a motor speed signal; and a control device configured to control output torque of the motor, in which the control device controls the output torque by using, as a current command corresponding to a command value of the output torque, a signal obtained by adding a combined correction signal, which is an addition result between a torque-based correction signal obtained by causing the steering torque signal to pass through a second compensator and a motor speed-based correction signal obtained by causing the motor speed signal to pass through a fourth compensator, to an assist torque signal approximately proportional to a signal for assist torque calculation that is an addition result between a compensated steering torque signal obtained by causing the steering torque signal to pass through a first compensator and a compensated motor speed signal obtained by causing the motor speed signal to pass through a third compensator, and in each of the first compensator, the second compensator, the third compensator, and the fourth compensator, at least two or more stages of low-order filters of which an order is 1 or 2 are connected in series.

Advantageous Effects of Invention

The electric power steering control device according to the present disclosure can apply the electric power steering even to a large vehicle type.

BRIEF DESCRIPTION OF DRAWINGS

[FIG. 1] A configuration diagram representing an example of an electric power steering device according to a first embodiment.

[FIG. 2] A schematic block diagram representing an example of a configuration of a control device according to the first embodiment.

[FIG. 3] A view representing an example of an assist map according to the first embodiment.

[FIG. 4] A view representing an example of a transfer characteristic of a first compensator according to the first embodiment.

[FIG. 5] A view representing an example of a transfer characteristic of a second compensator according to the first embodiment.

[FIG. 6] A view representing a first example of a structure of a low-order filter according to the first embodiment.

[FIG. 7] A view representing a second example of the structure of the low-order filter according to the first embodiment.

[FIG. 8] A view representing a third example of the structure of the low-order filter according to the first embodiment.

[FIG. 9] A view representing a fourth example of the structure of the low-order filter according to the first embodiment.

[FIG. 10] A view representing an example of a maximum value of a torque proportional gain with respect to an order of a compensator according to the first embodiment.

[FIG. 11] A view representing an example of disturbance suppression performance with respect to the order of the compensator according to the first embodiment.

[FIG. 12] A schematic block diagram representing an example of a configuration of a control device according to a second embodiment.

[FIG. 13] A configuration diagram representing an example of a configuration of a vehicle according to a third embodiment.

## DESCRIPTION OF EMBODIMENTS

Hereinafter, embodiments will be described with reference to the drawings.

<First Embodiment>

First, a first embodiment will be described.

[Configuration of Electric Power Steering Device]

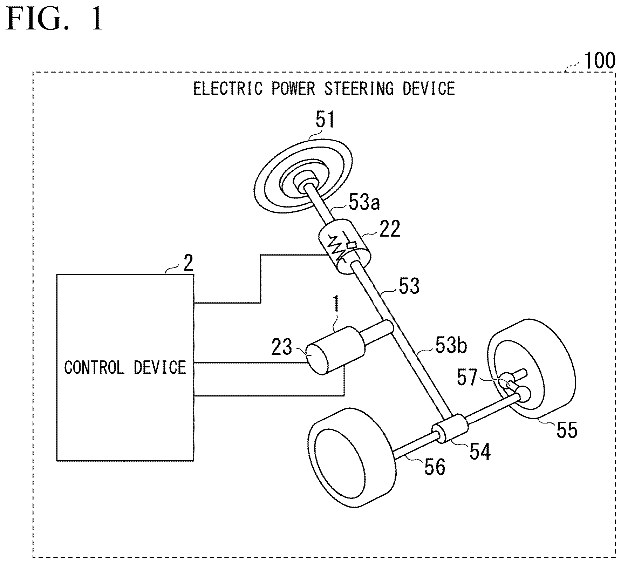

FIG. 1 is a configuration diagram showing an example of an electric power steering device according to the present embodiment. In FIG. 1, an electric power steering device 100 includes a steering wheel 51, a steering shaft 53, a rack and pinion gear 54, a wheel 55, a tie rod 56, a knuckle arm 57, a motor 1, a control device 2, a motor rotation angle sensor 23, and a torque sensor 22. A hardware configuration of the electric power steering device 100 shown in the drawing is similar to that of the electric power steering device in the related art, and is mass-produced as a device mounted on a vehicle. However, a software portion mounted in the control device 2 is different from the existing software. Details of elements different from the existing elements will be described later.

The steering shaft 53 includes an input shaft 53a connected to the steering wheel 51 side and an output shaft 53b connected to the rack and pinion gear 54 side. The input shaft 53a and the output shaft 53b are connected to each other by a torsion bar (not shown). The torsion bar is disposed in the torque sensor 22 and passes through the torque sensor 22 in an axial direction. The torsion bar is twisted in correspondence with steering torque applied to the steering wheel 51 by a steering wheel operation of a driver (not shown) who is a user of the vehicle. The torque sensor 22 determines the direction and the amount of the twist. Hereinafter, the steering wheel 51, the steering shaft 53, and the torsion bar will be collectively referred to as a steering.

Next, an operation of the electric power steering device 100 will be described. In FIG. 1, steering torque applied to the steering wheel 51 by a steering wheel operation by the driver is transmitted through the torsion bar in the torque sensor 22 and the steering shaft 53, and is further transmitted to a rack (not shown) in the rack and pinion gear 54 via the rack and pinion gear 54. The rack and the wheel 55 are connected to each other via the tie rod 56 and the knuckle arm 57.

Accordingly, in a case where the steering torque is transmitted to the rack by the steering wheel operation, the tie rod 56 pushes the knuckle arm 57 in the wheel 55 on one side, and the tie rod 56 pulls the knuckle arm 57 in the wheel 55 on the opposite side, so that the steering angle is applied to the wheel 55, and the wheel 55 is steered.

On the other hand, output torque generated from the motor 1 is transmitted to the steering shaft 53 as a steering assist force, and reduces the steering torque applied by the driver during steering. The motor 1 is configured to include, for example, an alternating current motor such as a permanent magnet type synchronous motor or an induction motor, or include a direct current motor.

The torque sensor 22 determines the steering torque applied to the torsion bar when the driver steers the steering wheel 51. In a case where the steering torque is applied, the torsion bar is twisted approximately in proportion to the steering torque. The torque sensor 22 determines a twisted angle and converts the twisted angle into a steering torque signal. The motor rotation angle sensor 23 is attached to a rotation axis of the motor 1, determines a rotation angle of the rotation axis, and outputs a motor rotation angle signal.

[Configuration of Control Device]

Next, a configuration of the control device 2 will be described in detail.

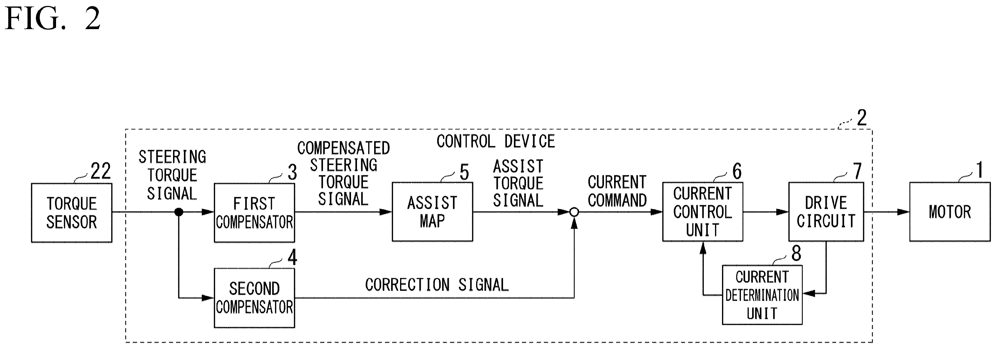

FIG. 2 is a schematic block diagram showing an example of a configuration of the control device 2 according to the present embodiment. The control device 2 shown in FIG. 2 includes a first compensator 3, a second compensator 4, an assist map 5, a current control unit 6, a drive circuit 7, and a current determination unit 8.

The control device 2 receives a steering torque signal which is an output of the torque sensor 22 as an input, and sets a result of multiplying the compensated steering torque signal obtained by causing the steering torque signal to pass through the first compensator 3 by a torque proportional gain determined by the assist map 5 as an assist torque signal. In addition, the control device 2 sets a result of adding a correction signal obtained by causing the steering torque signal to pass through the second compensator 4 to the assist torque signal as a current command.

The current control unit 6 performs control such that the current command and a current determination value output by the current determination unit 8 match each other. For this purpose, the current control unit 6 outputs, for example, a voltage command signal such as a PWM signal to the drive circuit 7 including, for example, an H bridge circuit or an inverter circuit. The drive circuit 7 applies a voltage corresponding to the voltage command signal to the motor 1. The motor 1 generates output torque corresponding to the voltage applied by the drive circuit 7. In addition, the current determination unit 8 determines a current flowing through the drive circuit 7 or the motor 1 as a response to the voltage applied to the motor 1.

Characteristics of the control device 2 according to the above-described configuration will be described below.

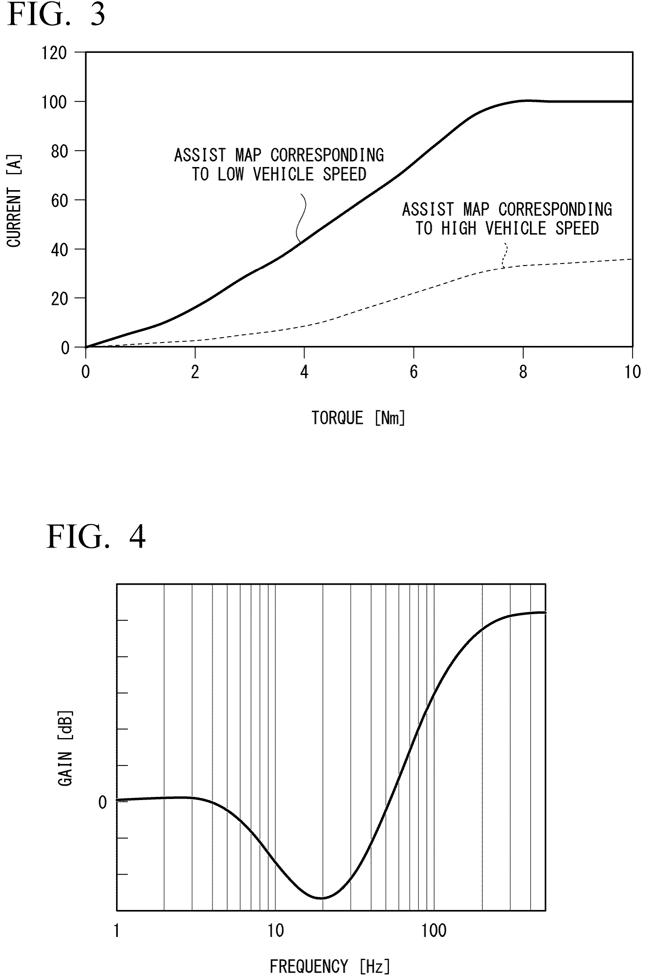

FIG. 3 is a view showing an example of the assist map 5. The assist map 5 sets a relationship of a current corresponding to the assist torque with respect to the steering torque, and a gradient of the assist map is calculated as the torque proportional gain. The assist map 5 may be variable in correspondence with a vehicle speed. In the example of FIG. 3, the assist map 5 has two maps including an assist map corresponding to a low vehicle speed and an assist map corresponding to a high vehicle speed, and the torque proportional gain for the vehicle speed between the low vehicle speed and the high vehicle speed is calculated by interpolating the two maps.

Next, characteristics required for the first compensator 3 and the second compensator 4 will be described. The assist map 5 corresponds to a characteristic of the steering assist force with respect to the steering torque. In a frequency band of the steering by the driver, it is required to accurately realize the characteristic of the steering assist force set in the assist map 5. Therefore, in the frequency band of the steering by the driver, it is required to make the steering torque signal and a compensated steering torque signal match each other. Therefore, for example, a gain of the first compensator 3 at 0 Hz may be approximately 0 dB. However, the gain of the first compensator 3 at 0 Hz does not need to be strictly 0 dB, and may be a gain in a range in which a desired steering assist force can be output.

FIG. 4 is a view showing an example of a transfer characteristic of the first compensator 3. The frequency is plotted on the horizontal axis, and the gain is plotted on the vertical axis. As shown in FIG. 4, it can be seen that the first compensator 3 has a characteristic of approximately 0 dB up to approximately 5 Hz. In addition, the gain is adjusted to secure suppression of vibration due to disturbance and stability of a feedback loop in a frequency region higher than 5 Hz.

FIG. 4 shows a characteristic of only the first compensator 3, and the assist torque signal is a result of multiplying the compensated steering torque signal obtained by causing the steering torque signal to pass through the first compensator 3 by the torque proportional gain determined by the assist map 5. Therefore, a transfer characteristic from the steering torque signal to the assist torque signal varies depending on the magnitude of the torque proportional gain.

Next, the second compensator 4 will be described. A main role of the second compensator 4 is to improve performance in a region where the torque proportional gain is small. Under operating conditions in which the torque proportional gain is large, an effect of the feedback through a series path from the steering torque signal to the assist torque signal reduces the influence of the disturbance. On the other hand, under operating conditions in which the torque proportional gain is small, the effect of the feedback of the series path is decreased, and the influence of the disturbance is increased.

Since a parallel path from the steering torque signal to the correction signal is not affected by the torque proportional gain, the effect of feedback of the parallel path reduces the influence of the disturbance under the operating conditions in which the torque proportional gain is small, and the performance of the control device 2 can be improved.

However, since a basic steering assist force is determined by the series path, in a case where the parallel path functions in the frequency band in which the driver steers, there is a possibility that the steering feeling of the driver is adversely affected. Therefore, the parallel path needs to have a characteristic in which the gain is decreased in the frequency band in which the driver steers and does not affect steering. Since the highest frequency at which the driver steers is generally approximately 5 Hz, the characteristic is set such that the gain decreases at a frequency lower than the highest frequency.

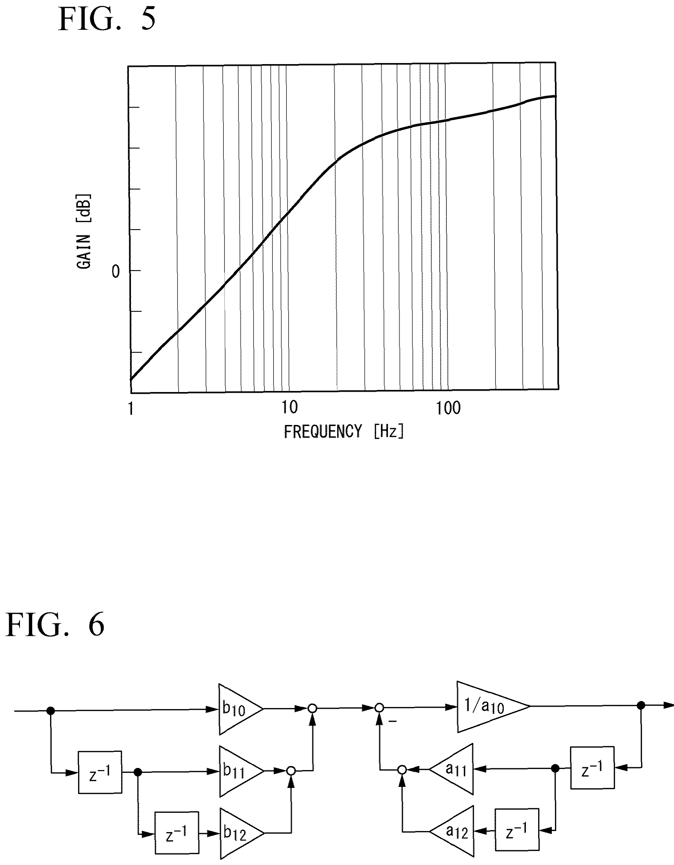

FIG. 5 is a view showing an example of a transfer characteristic of the second compensator 4. As shown in FIG. 5, it can be seen that the characteristic is a differential characteristic in a low frequency region of 10 Hz or less, and the gain decreases in a frequency region corresponding to steering by the driver.

Next, configurations of the first compensator 3 and the second compensator 4 will be described. In at least any one of the first compensator 3 and the second compensator 4, multiple stages of low-order filters of which an order is 1 or 2 are connected in series. The term "low-order filters" refer to filters in which the highest order of the denominator polynomial and the numerator polynomial of the transfer function is 1 or 2.

Equations (1) and (2) shown below are examples of a low-order filter of which an order is 2, and since there are an attenuation coefficient $\zeta$ and a natural angular frequency $\omega$ in each of the denominator polynomial and the numerator polynomial, the transfer characteristic is determined by a total of four parameters.

[Math. 1]

$$C_{1-1}(s) = \frac{s^2 + 2\zeta_{n1}\omega_{n1}s + \omega_{n1}{}^2}{s^2 + 2\zeta_{d1}\omega_{d1}s + \omega_{d1}{}^2} \qquad \cdots \ (1)$$

[Math. 2]

$$C_{1-2}(s) = \frac{s^2 + 2\zeta_{n2}\omega_{n2}s + \omega_{n2}{}^2}{s^2 + 2\zeta_{d2}\omega_{d2}s + \omega_{d2}{}^2} \qquad \cdots \ (2)$$

In addition, Equation (3) shown below is a result of connecting the compensators represented by Equations (1) and (2) in series, and the highest order is 4.

[Math. 3]

$$C_1(s) = C_{1-1}(s)C_{1-2}(s) = \frac{s^2 + 2\zeta_{n1}\omega_{n1}s + \omega_{n1}{}^2}{s^2 + 2\zeta_{d1}\omega_{d1}s + \omega_{d1}{}^2} \cdot \frac{s^2 + 2\zeta_{n2}\omega_{n2}s + \omega_{n2}{}^2}{s^2 + 2\zeta_{d2}\omega_{d2}s + \omega_{d2}{}^2}$$

$$\cdots \ (3)$$

As described above, by connecting multiple stages of low-order filters in series, a high-order compensator can be realized. In the above example, an example in which two stages of low-order filters of which an order is 2 are connected has been described, but the number of stages of the low-order filters to be connected may be three or more. In this case, the amount of computation is increased, but the degree of freedom of the characteristics that can be represented by the first compensator 3 and the second compensator 4 is increased. Therefore, there is a possibility that the performance of the control device can be improved.

In addition, the compensator having the above-described configuration may be applied to both the first compensator 3 and the second compensator 4, or the compensator having the above-described configuration may be applied to only any one of the first compensator 3 or the second compensator 4. As an example in which the compensator having the above-described configuration is applied only to any one of the first compensator 3 and the second compensator 4, a configuration can be considered in which a high-order compensator is applied to the second compensator 4 and the first compensator 3 has a characteristic of allowing the steering torque signal to pass through the first compensator 3 as it is. There is a possibility that the performance of the control device 2 is degraded as compared with a case where the high-order compensator is applied to both the compensators, but a computational load and software capacity can be reduced.

Although Equations (1) and (2) represent the low-order filter in a continuous-time system, it is necessary to represent the low-order filters in a discrete-time system shown in Equations (4) and (5) below from the viewpoint of implementation in software. In addition, as in the case of the continuous-time system, a case where the low-order filters of Equations (4) and (5) are connected in series is shown in Equation (6).

$$C_{1-1}(z) = \frac{b_{10} + b_{11}z^{-1} + b_{12}z^{-2}}{a_{10} + a_{11}z^{-1} + a_{12}z^{-2}} \qquad \cdots \ (4)$$

$$C_{1-2}(z) = \frac{b_{20} + b_{21}z^{-1} + b_{22}z^{-2}}{a_{20} + a_{21}z^{-1} + a_{22}z^{-2}} \qquad \cdots \ (5)$$

$$C_1(z) = C_{1-1}(z)C_{1-2}(z) = \frac{b_{10} + b_{11}z^{-1} + b_{12}z^{-2}}{a_{10} + a_{11}z^{-1} + a_{12}z^{-2}} \cdot \frac{b_{20} + b_{21}z^{-1} + b_{22}z^{-2}}{a_{20} + a_{21}z^{-1} + a_{22}z^{-2}}$$

$$\cdots \ (6)$$

In addition, the transfer functions shown in Equations (4) and (5) can be realized by a plurality of structures.

FIG. 6 is a view showing an example of a structure of a low-order filter that realizes the computation of Equation (4). The term "structure" refers to a structure obtained by converting the transfer function into a form of a state equation and expressing the transfer function as a block diagram such that the transfer function can be implemented in software.

Here, $z^{-1}$ in the drawing is a delay block that means a delay of one cycle of computation processing. It is noted that parameters described in a gain block of FIG. 6 correspond to parameters b10 to b12 and a10 to a12 of Equation (4).

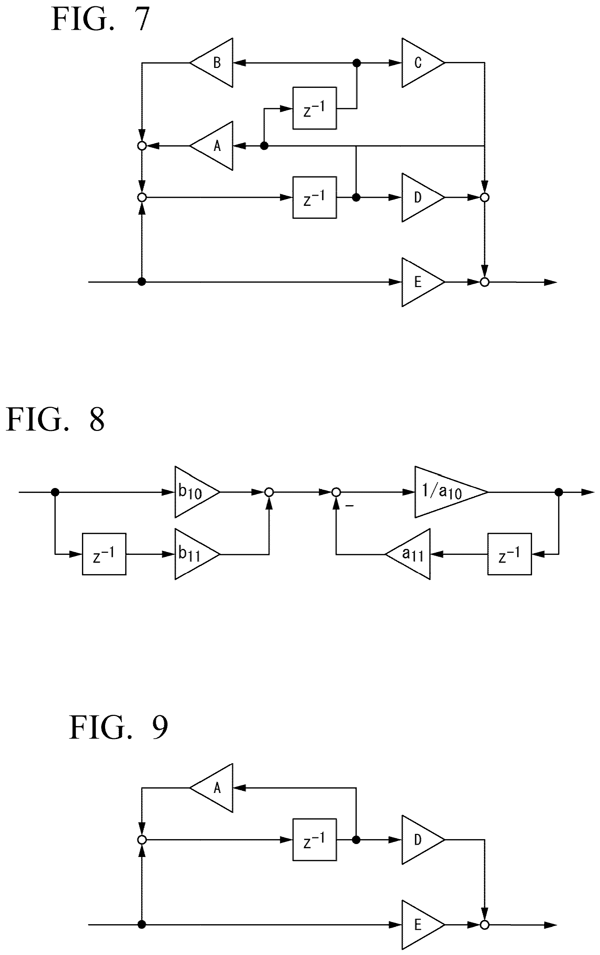

In addition, FIG. 7 is a view showing an example of another structure for realizing the computation of Equation (4). Gains A to E described in a gain block of FIG. 7 are calculated by converting parameters b10 to b12 and a10 to a12 of Equation (4) as shown in Equations (7) to (11).

$$A = -\frac{a_{11}}{a_{10}} \qquad \cdots \ (7)$$

$$B = -\frac{a_{12}}{a_{10}} \qquad \cdots \ (8)$$

$$C = \frac{a_{10}b_{12} - a_{12}b_{10}}{a_{10}{}^2} \qquad \cdots \ (9)$$

$$D = \frac{a_{10}b_{11} - a_{11}b_{10}}{a_{10}{}^2} \qquad \cdots \ (10)$$

$$E = \frac{b_{10}}{a_{10}} \qquad \cdots \ (11)$$

So far, an example in which the order of the low-order filter is 2 has been described, but the order of the low-order filter may be 1. Examples in which the order of the low-order filter is 1 are shown in the following Equations (12) and (13). In addition, an example in which two stages of the low-order filters of which an order is 1 are connected in series is shown in the following Equation (14).

$$C_{1-1}(s) = \frac{s + \omega_{n1}}{s + \omega_{d1}} \qquad \cdots \ (12)$$

$$C_{1-2}(s) = \frac{s + \omega_{n2}}{s + \omega_{d2}} \qquad \cdots \ (13)$$

$$C_1(s) = C_{1-1}(s)C_{1-2}(s) = \frac{s + \omega_{n1}}{s + \omega_{d1}} \cdot \frac{s + \omega_{n2}}{s + \omega_{d2}} \qquad \cdots \ (14)$$

In addition, in a case where Equations (12) to (14) are expressed in a discrete-time system, Equations (15) to (17) shown below are obtained.

$$C_{1-1}(z) = \frac{b_{10} + b_{11}z^{-1}}{a_{10} + a_{11}z^{-1}} \qquad \cdots \ (15)$$

$$C_{1-2}(z) = \frac{b_{20} + b_{21}z^{-1}}{a_{20} + a_{21}z^{-1}} \qquad \cdots \ (16)$$

$$C_1(z) = C_{1-1}(z)C_{1-2}(z) = \frac{b_{10} + b_{11}z^{-1}}{a_{10} + a_{11}z^{-1}} \cdot \frac{b_{20} + b_{21}z^{-1}}{a_{20} + a_{21}z^{-1}}$$

$$\cdots \ (17)$$

In addition, as in the example in which the order of the low-order filter is 2, a plurality of structures of the low-order filter that realize the computations shown in Equations (15) and (16) are considered, and for example, structures shown in FIGS. 8 and 9 are considered. The structure shown in FIG. 8 is equivalent to the structure of FIG. 6 in which a12 and b12 are removed. In addition, the structure shown in FIG. 9 is equivalent to the structure of FIG. 7 in which B and C are removed. Therefore, the features of the structures shown in FIGS. 8 and 9 are the same as in the examples of the structures shown in FIGS. 6 and 7.

Next, the configurations and features of the first compensator 3 and the second compensator 4 will be described. Elements constituting the compensator include a structure of a low-order filter, an order of a low-order filter, and the number of connections of the low-order filter. Regarding the number of connections of the low-order filter, as described above, the degree of freedom of the characteristic that can be represented by the compensator is improved as the number of connected stages increases. Therefore, there is a possibility that the performance of the control device 2 can be improved by increasing the number of low-order filters connected in series.

In addition, in a case where all the compensators of at least any one of the first compensator 3 and the second compensator 4 are constituted by low-order filters having the same structure, processing of the one low-order filter can be used as a function, and thus there is an advantage that software implementation is easy. In addition, the amount of computation and the ease of parameter adjustment of the low-order filter vary depending on the structure. For example, in the structure of the low-order filter shown in FIG. 6, since the correspondence relationship between the transfer functions of the continuous-time system and the discrete-time system is easy to understand, it is easy for an adjustment operator to change the parameters and adjust the transfer characteristic. Therefore, in a case where the low-order filter compensator is manually adjusted, the structure of the low-order filter shown in FIG. 6 is effective.

In addition, in the structure of the low-order filter shown in FIG. 7, it is necessary to convert the parameters of the transfer function of the discrete-time system to calculate each gain. Therefore, it is difficult to grasp the influence of the change in the parameter on the transfer characteristic, and it is relatively difficult to manually adjust the parameter. However, since the structure of FIG. 6 can be realized with half of the delay blocks, it is advantageous from the viewpoint of computational load.

As described above, the amount of computation and the ease of parameter adjustment are different depending on the structure of the low-order filter. Therefore, for example, it is effective to apply the structure of the low-order filter shown in FIG. 6 to the compensator that needs to manually adjust the parameters and to apply the structure of the low-order filter shown in FIG. 7 to the compensator that does not need to adjust the parameters.

In addition, in a case where all the low-order filters constituting the compensator of at least any one of the first compensator 3 and the second compensator 4 have the same order, the upper and lower limit values or the fixed-point setting of the parameters set in each low-order filter can be made common. This is effective in simplifying setting of a search range or processing of the search in a case where the parameters of the low-order filter for realizing the desired transfer characteristic are designed in an exploratory manner. **In** particular, the present invention is effective in a case where there are many parameters to be designed, such as a case where a compensator is configured by connecting three or more stages of low-order filters in series.

On the other hand, in a case where the low-order filter constituting the compensator of at least any one of the first compensator 3 and the second compensator 4 is realized at different orders, there is a possibility that the compensator can be optimized from the viewpoint of computational load. For example, in a case where a desired characteristic can be realized by a compensator in which a low-order filter of which an order is 2 and a low-order filter of which an order is 1 are connected in series, the amount of computation can be reduced as compared with a case where a compensator is configured by connecting two stages of low-order filters of which an order is 2.

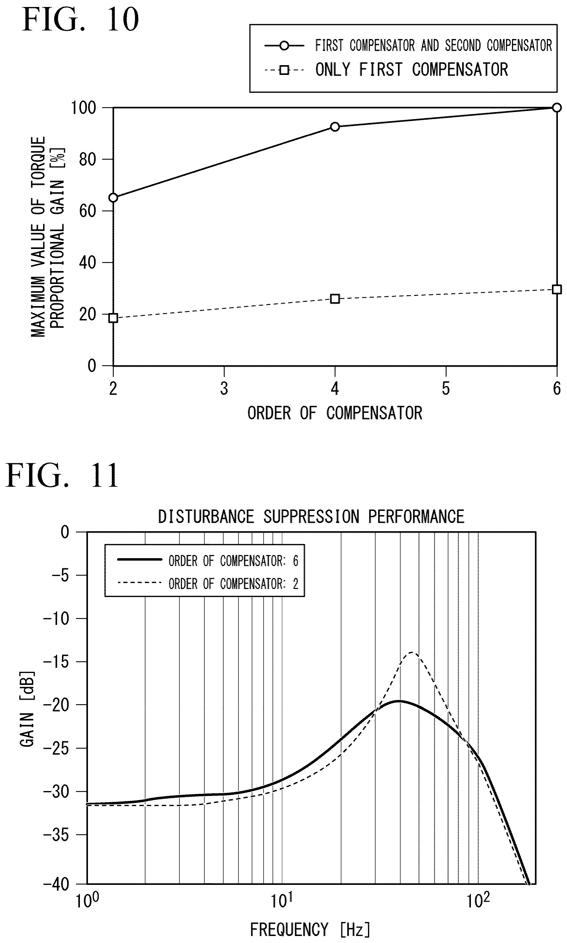

The effect of the above-described configuration will be described with reference to calculation results shown in FIGS. 10 and 11. FIG. 10 is a view showing an example of a maximum value of the torque proportional gain with respect to the order of the compensator. The example shown in FIG. 10 is a result of calculating the maximum value of the torque proportional gain that can be realized in correspondence with the order of each compensator with respect to the configuration in which both the first compensator 3 and the second compensator 4 are provided and the configuration in which only the first compensator 3 is provided.

In this calculation result, all the low-order filters have the same structure, the order is set to 2, and the number of low-order filters connected in series is increased to change the order of each compensator. In addition, in FIG. 10, in the configuration including the first compensator 3 and the second compensator 4, the maximum value of the torque proportional gain in a case where the order of each compensator is 6 is set as a reference, and the maximum value of the torque proportional gain under other conditions is represented. It is noted that the calculation of the torque proportional gain is obtained by exploratory design of the parameters of each low-order filter under the constraint that the characteristic required for each compensator described above is satisfied and a predetermined stability margin is realized.

From the calculation results shown in FIG. 10, the maximum value of the torque proportional gain tends to be improved as the order of each compensator increases. In addition, it can be seen that the maximum value of the torque proportional gain can be improved in the configuration in which the second compensator 4 is provided in addition to the first compensator 3 as compared with the configuration in which only the first compensator 3 is provided.

Next, FIG. 11 is a view showing an example of disturbance suppression performance with respect to the order of the compensator. The smaller the gain of the disturbance suppression performance, the less likely the torque input as disturbance to be transmitted to the steering wheel. It is noted that the compensator used for the calculation has a configuration including the first compensator 3 and the second compensator 4, all the low-order filters have the same structure, the order is set to 2, and the number of the low-order filters connected in series is increased to change the order of each compensator. From the results shown in FIG. 11, it can be seen that the more excellent disturbance suppression performance is realized in a case where the order of each of compensators is 6 as compared with a case where the order is 2.

[Summary of First Embodiment]

As described above, the electric power steering control device 2 according to the present embodiment controls the output torque of the motor 1 that outputs the assist torque based on the steering torque signal from the torque sensor 22 that determines the steering torque applied to the steering wheel 51 by the driver (user). For example, the control device 2 controls the output torque of the motor 1 by using, as a current command corresponding to a command value of the output torque, a signal obtained by adding a correction signal obtained by causing the steering torque signal to pass through the second compensator 4 to an assist torque signal approximately proportional to a compensated steering torque signal obtained by causing the steering torque signal from the torque sensor 22 to pass through the first compensator 3. In each of the first compensator 3 and the second compensator 4, at least two or more stages of low-order filters of which an order is 1 or 2 are connected in series.

Accordingly, in the electric power steering control device 2, the performance of the control device 2 can be improved, the gradient of the assist map representing the magnitude of the assist amount with respect to steering can be increased, and a remarkable effect that is not obtained in the related art, that is, the electric power steering can be applied to a large vehicle type requiring a large steering assist force is obtained. In addition, since the first compensator 3 and the second compensator 4 are configured by connecting multiple stages of low-order filters in series, it is easy to implement software.

In addition, the first compensator 3 has a characteristic of approximately 0 dB at 0 Hz. In addition, the second compensator 4 has a characteristic of reducing a low frequency component.

Accordingly, the electric power steering control device 2 generates the current command corresponding to a desired steering assist force by the first compensator 3, the second compensator 4 does not affect steering by a driver, and an effect of improving the disturbance suppression performance under the operating condition in which the torque proportional gain is small can be obtained.

For example, all the low-order filters constituting at least any one of the first compensator 3 and the second compensator 4 have the same order.

As a result, the electric power steering control device 2 can have common constraints such as setting of upper and lower limit values of parameters and fixed-point of each low-order filter constituting each compensator, and can reduce man-hours for designing the parameters.

In addition, all the low-order filters constituting at least any one of the first compensator 3 and the second compensator 4 have the same structure.

As a result, the electric power steering control device 2 can realize the first compensator 3 and the second compensator 4 by using the same computation structure, and thus, an effect of reducing man-hours for software implementation can be obtained.

In addition, the electric power steering device 100 according to the present embodiment includes the torque sensor 22 that determines the steering torque applied to the steering wheel 51 by the driver (user) and the control device 2, and the output torque of the motor 1 is controlled by the control device 2 based on the steering torque determined by the torque sensor 22.

Accordingly, the electric power steering device 100 can improve the performance of the control device 2, can increase the gradient of the assist map representing the magnitude of the assist amount with respect to steering, and can obtain a remarkable effect that is not obtained in the related art, that is, the electric power steering can be applied to a large vehicle type requiring a large steering assist force.

In addition, the electric power steering control system according to the present embodiment includes the steering wheel 51, the motor 1 that outputs an assist torque based on a steering torque signal from the torque sensor 22 that determines steering torque applied to the steering wheel 51 by a driver (user), and the control device 2 that controls an output torque of the motor 1. For example, the control device 2 controls the output torque of the motor 1 by using, as a current command corresponding to a command value of the output torque, a signal obtained by adding a correction signal obtained by causing the steering torque signal to pass through the second compensator 4 to an assist torque signal approximately proportional to a compensated steering torque signal obtained by causing the steering torque signal from the torque sensor 22 to pass through the first compensator 3. In each of the first compensator 3 and the second compensator 4, at least two or more stages of low-order filters of which an order is 1 or 2 are connected in series.

Accordingly, the electric power steering control system can improve the performance of the control device 2, can increase the gradient of the assist map representing the magnitude of the assist amount with respect to steering, and can obtain a remarkable effect that is not obtained in the related art, that is, the electric power steering can be applied to a large vehicle type requiring a large steering assist force. In addition, since the first compensator 3 and the second compensator 4 are configured by connecting multiple stages of low-order filters in series, it is easy to implement software.

<Second Embodiment>

Next, a second embodiment will be described.

In the first embodiment described above, a configuration in which the steering torque is used as an input of the input/output device has been described. On the other hand, the present embodiment is different from the first embodiment in that a motor rotation speed is used in addition to the steering torque, but the other points are similar.

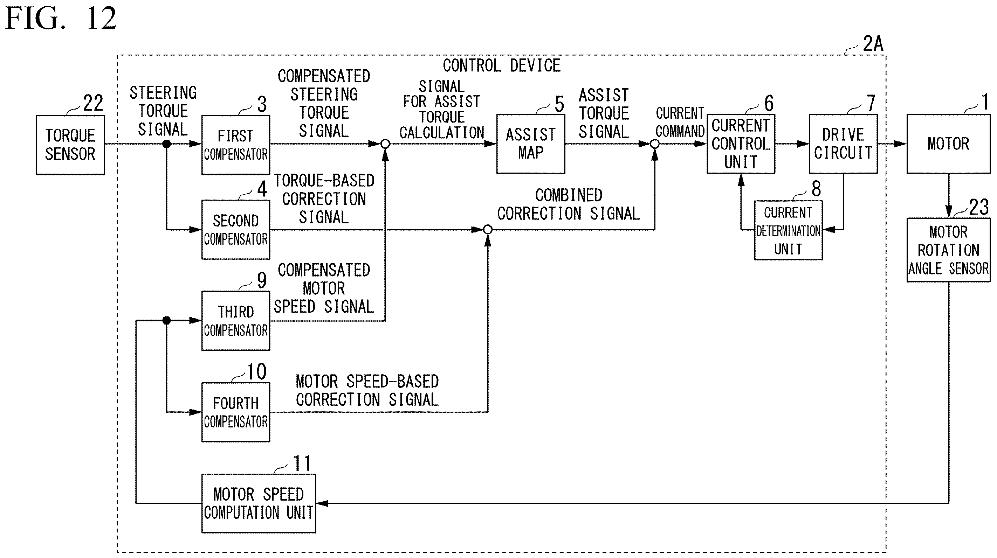

FIG. 12 is a schematic block diagram showing an example of a configuration of a control device 2A according to the present embodiment. The control device 2A shown in FIG. 2 further includes a third compensator 9, a fourth compensator 10, and a motor speed computation unit 11 as compared with the configuration shown in FIG. 2 of the first embodiment. The motor speed computation unit 11 computes a motor speed of the motor 1 from an output of the motor rotation angle sensor 23 that determines a rotation angle of the motor 1. The third compensator 9 and the fourth compensator 10 are connected to an output of the motor speed computation unit 11.

A compensated motor speed signal obtained by causing the motor speed computed by the motor speed computation unit 11 to pass through the third compensator 9 is added to a compensated steering torque signal obtained by causing the steering torque signal to pass through the first compensator 3 to obtain a signal for assist torque calculation. In addition, a motor speed-based correction signal obtained by causing the motor speed computed by the motor speed computation unit 11 to pass through the fourth compensator 10 is added to the torque-based correction signal obtained by causing the steering torque signal to pass through the second compensator 4 to obtain a combined correction signal.

Further, the current command is a result of adding the assist torque signal, which is a result of multiplying the signal for assist torque calculation by the torque proportional gain calculated by the assist map 5, and the combined correction signal. Processing after generation of the current command is similar as in the first embodiment.

As described above, the control device 2A according to the present embodiment is obtained by adding a feedback loop of the motor speed to the control device 2 described in the first embodiment. The motor speed calculated from the output of the motor rotation angle sensor 23 can generally be determined up to a higher frequency region compared to the determination value of the steering torque. Therefore, by adding the feedback loop of the motor speed, it is easy to secure a stability margin, and it is possible to sufficiently suppress vibration such as oscillation.

Further, since the stability of the feedback loop does not depend on the torque sensor 22, it is easy to adapt to various torque sensors. For example, a deterioration factor of the stability due to a problem unique to the torque sensor, such as a spring constant of a torsion bar, a phase delay of a determination value, and a delay of communication, does not affect the stability.

Next, characteristics of the third compensator 9 and the fourth compensator 10 will be described. The third compensator 9 and the fourth compensator 10 have characteristics in which a gain decreases in a low frequency region in order to reduce components of a steering frequency included in the motor speed signal. It is noted that the frequency at which a driver steers is generally 5 Hz or less, and thus a characteristic in which the gain decreases at 5 Hz or less may be adopted.

In addition, noise is superimposed on the motor speed signal in a process of determination, and generally, this noise is often in a band of 200 to 500 Hz. Therefore, the third compensator 9 and the fourth compensator 10 may have characteristics of reducing the gain in a frequency range of 200 Hz to 500 Hz in addition to the characteristics of decreasing the gain in a low frequency region of 5 Hz or less to reduce the influence of the determination noise. By using the compensator with such a characteristic, a compensator that suppresses viscous feeling to steering while not unnecessarily increasing the influence of noise in the steering frequency region can be realized.

In the present embodiment, the characteristics of the first compensator 3 and the second compensator 4 may be characteristics that realize the same requirements as in the first embodiment. In addition, the structures and orders of the third compensator 9 and the fourth compensator 10 may be set from the same viewpoint as in the first embodiment.

[Summary of Second Embodiment]

As described above, the electric power steering control device 2A according to the present embodiment controls the output torque of the motor 1 that outputs the assist torque based on the steering torque signal from the torque sensor 22 that determines the steering torque applied to the steering wheel 51 by the driver (user) and the motor speed signal. For example, the control device 2A controls the output torque of the motor 1 by using, as a current command corresponding to a command value of the output torque, a signal obtained by adding the combined correction signal, which is an addition result between the torque-based correction signal obtained by causing the steering torque signal to pass through the second compensator 4 and the motor speed-based correction signal obtained by causing the motor speed signal to pass through the fourth compensator 10, to an assist torque signal approximately proportional to a signal for assist torque calculation that is an addition result between the compensated steering torque signal obtained by causing the steering torque signal from the torque sensor 22 to pass through the first compensator 3 and the compensated motor speed signal obtained by causing the motor speed signal to pass through the third compensator 9. In each of the first compensator 3, the second compensator 4, the third compensator 9, and the fourth compensator 10, at least two or more stages of low-order filters of which an order is 1 or 2 are connected in series.

As a result, the electric power steering control device 2A according to the present embodiment can increase the degree of freedom of the transfer characteristic that can be expressed by the control device 2A by adding the feedback loop of the motor speed, and can improve the performance of the control device 2A. Therefore, the electric power steering control device 2A can increase the gradient of the assist map representing the magnitude of the assist amount with respect to steering, and can obtain a remarkable effect that the electric power steering can be applied to a large vehicle type requiring a large steering assist force. In addition, since the motor speed can be determined up to a higher frequency region compared to the determination value of the steering torque, it is possible to improve the disturbance suppression performance as compared with a case where only the steering torque is used. Further, since the first compensator 3, the second compensator 4, the third compensator 9, and the fourth compensator 10 are configured by connecting multiple stages of low-order filters in series, it is easy to implement software.

In addition, the first compensator 3 has a characteristic of approximately 0 dB at 0 Hz. In addition, the second compensator 4, the third compensator 9, and the fourth compensator 10 have characteristics of reducing the low frequency components.

As a result, the electric power steering control device 2A can generate the current command corresponding to a desired steering assist force by the first compensator 3, and can improve the disturbance suppression performance, the stability of the feedback loop, and the like under the operating condition in which the torque proportional gain is small without affecting the steering by the driver by the second compensator 4, the third compensator 9, and the fourth compensator 10.

For example, all the low-order filters constituting at least any one of the first compensator 3, the second compensator 4, the third compensator 9, and the fourth compensator 10 have the same order.

As a result, the electric power steering control device 2A can have a common constraint such as setting of upper and lower limit values of parameters and fixed-point setting of each low-order filter constituting each compensator, and can reduce the man-hours for designing the parameters.

In addition, all the low-order filters constituting at least any one of the first compensator 3, the second compensator 4, the third compensator 9, and the fourth compensator 10 have the same structure.

As a result, the electric power steering control device 2A can realize the first compensator 3, the second compensator 4, the third compensator 9, and the fourth compensator 10 by using the same computation structure, and thus it is possible to reduce the man-hours for software implementation.

In addition, the electric power steering control system according to the present embodiment includes the steering wheel 51, the motor 1 that outputs assist torque based on the steering torque signal and the motor speed signal from the torque sensor 22 that determines the steering torque applied to the steering wheel 51 by the driver (user), and the control device 2A that controls the output torque of the motor 1. For example, the control device 2A controls the output torque of the motor 1 by using, as a current command corresponding to a command value of the output torque, a signal obtained by adding the combined correction signal, which is an addition result between the torque-based correction signal obtained by causing the steering torque signal to pass through the second compensator 4 and the motor speed-based correction signal obtained by causing the motor speed signal to pass through the fourth compensator 10, to an assist torque signal approximately proportional to a signal for assist torque calculation that is an addition result between the compensated steering torque signal obtained by causing the steering torque signal from the torque sensor 22 to pass through the first compensator 3 and the compensated motor speed signal obtained by causing the motor speed signal to pass through the third compensator 9. In each of the first compensator 3, the second compensator 4, the third compensator 9, and the fourth compensator 10, at least two or more stages of low-order filters of which an order is 1 or 2 are connected in series.

As a result, in the electric power steering control system according to the present embodiment, the degree of freedom of the transfer characteristics that can be expressed by the control device 2A is increased by adding the feedback loop of the motor speed, and the performance of the control device 2A can be improved. Therefore, the electric power steering control system can increase the gradient of the assist map representing the magnitude of the assist amount with respect to steering, and can obtain a remarkable effect that the electric power steering can be applied to a large vehicle type requiring a large steering assist force. In addition, since the motor speed can be determined up to a higher frequency region compared to the determination value of the steering torque, it is possible to improve the disturbance suppression performance as compared with a case where only the steering torque is used. Further, since the first compensator 3, the second compensator 4, the third compensator 9, and the fourth compensator 10 are configured by connecting multiple stages of low-order filters in series, it is easy to implement software.

<Third Embodiment>

Next, a third embodiment will be described.

In the present embodiment, a configuration of a vehicle equipped with the electric power steering device 100 described in the first embodiment and the second embodiment will be described. The vehicle is, for example, an electric-powered vehicle that uses electricity for power, such as a hybrid vehicle, a plug-in hybrid vehicle, an electric vehicle, and a hydrogen fuel cell vehicle. The vehicle may be a gasoline vehicle, a diesel vehicle, or the like.

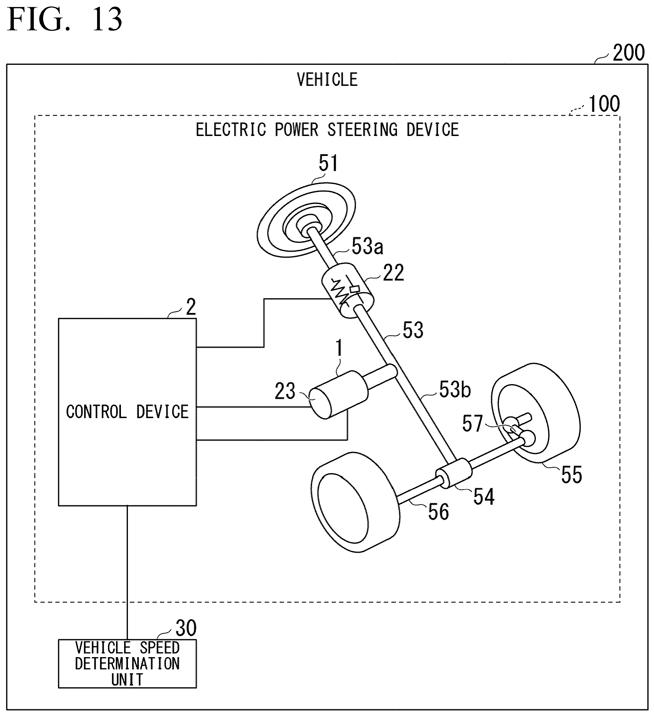

FIG. 13 is a configuration diagram showing an example of a configuration of a vehicle 200 according to the present embodiment. The vehicle 200 includes a vehicle speed determination unit 30 and the electric power steering device 100. The vehicle speed determination unit 30 determines a speed of the vehicle 200 based on, for example, a rotation speed of the wheel 55.

The control device 2 of the electric power steering device 100 controls the output torque of the motor 1 based on the vehicle speed determined by the vehicle speed determination unit 30 and the steering torque (steering torque signal from the torque sensor 22). The vehicle speed affects the characteristic of the assist map 5 as described with reference to FIG. 3. The control device 2 determines the torque proportional gain by using the assist map corresponding to the vehicle speed determined by the vehicle speed determination unit 30, and sets a result of multiplying the compensated steering torque signal by the torque proportional gain as an assist torque signal. It is noted that the control device 2 may be a control device 2A shown in FIG. 12 of the second embodiment.

As described above, the vehicle 200 according to the present embodiment includes the vehicle speed determination unit 30 that determines the speed of the vehicle 200 and the electric power steering device 100 in which the output torque of the motor 1 is controlled based on the vehicle speed determined by the vehicle speed determination unit 30 and the steering torque.

Accordingly, the electric power steering device 100 in which the gradient of the assist map representing the magnitude of the assist amount with respect to the steering is increased is mounted on the vehicle 200, and thus, a remarkable effect that an application to electric power steering even in a large vehicle type that requires a large steering assist force is possible, which has not been achieved in the related art, can be obtained.

Hitherto, the embodiments have been described in detail with reference to the drawings. Meanwhile, specific configurations are not limited to these embodiments, and each embodiment can be appropriately modified or omitted.

It is noted that at least part of the processing of the control device 2 (2A) may be performed by recording a program for realizing at least part of the functions of the control device 2 (2A) on a computer-readable recording medium, reading the program recorded on the recording medium into the computer system, and executing the program. The term "computer system" here includes an OS and hardware such as a peripheral device.

In addition, a term "computer-readable recording medium" refers to a storage device, for example, a portable medium such as a flexible disk, a magneto-optical disk, a ROM, or a CD-ROM, a hard disk built in a computer system, or the like. Furthermore, the term "computer-readable recording medium" includes a medium which dynamically holds the program for a short period of time as in a communication line when the program is transmitted through a network such as the Internet or a communication line such as a telephone line, and a medium which holds the program for a certain period of time as in a volatile memory inside the computer system serving as a server or a client in that case. In addition, the program may realize some of the above-described functions, and, furthermore, may be capable of realizing the above-described functions in combination with the program previously recorded in the computer system. In addition, the program may be stored in a predetermined server, and the program may be distributed (downloaded or the like) through the communication line in response to a request from another device.

In addition, a part or all of the functions of the control device 2 (2A) may be realized as an integrated circuit such as a large scale integration (LSI). Each function may be individually processed by a processor, or some or all of the functions may be integrated and processed by the processor. In addition, a method for the integrated circuit is not limited to the LSI, and may be realized by a dedicated circuit or a general-purpose processor. In addition, when a technology for the integrated circuit is introduced to replace the LSI as a semiconductor technology advances, an integrated circuit based on the technology may be used.

REFERENCE SIGNS LIST

1 Motor
2, 2A Control device
3 First compensator
4 Second compensator
5 Assist Map
6 Current control unit
7 Drive circuit
8 Current determination unit
9 Third Compensator
10 Fourth compensator
11 Motor speed computation unit
22 Torque sensor
23 Motor rotation angle sensor
51 Steering wheel
53 Steering shaft
54 Rack and pinion gear
55 Wheel
56 Tie rod
57 Knuckle arm
100 Electric power steering device
200 Vehicle

**Claims**

1. An electric power steering control device configured to control output torque of a motor configured to output assist torque based on a steering torque signal from a torque sensor configured to determine steering torque applied to a steering wheel by a user,

wherein the output torque is controlled by using, as a current command corresponding to a command value of the output torque, a signal obtained by adding a correction signal obtained by causing the steering torque signal to pass through a second compensator to an assist torque signal approximately proportional to a compensated steering torque signal obtained by causing the steering torque signal to pass through a first compensator, and in each of the first compensator and the second compensator, at least two or more stages of low-order filters of which an order is 1 or 2 are connected in series.

2. The electric power steering control device according to Claim 1,

wherein the first compensator has a characteristic of approximately 0 dB at 0 Hz, and
the second compensator has a characteristic of reducing a low frequency component.

3. The electric power steering control device according to Claim 1,
wherein all of the low-order filters constituting at least any one of the first compensator and the second compensator have the same order.

4. The electric power steering control device according to Claim 1,
wherein all of the low-order filters constituting at least any one of the first compensator and the second compensator have the same structure.

5. An electric power steering control device configured to control output torque of a motor configured to output assist torque based on a steering torque signal from a torque sensor configured to determine steering torque applied to a steering wheel by a user and a motor speed signal,

wherein the output torque is controlled by using, as a current command corresponding to a command value of the output torque, a signal obtained by adding a combined correction signal, which is an addition result between a torque-based correction signal obtained by causing the steering torque signal to pass through a second compensator and a motor speed-based correction signal obtained by causing the motor speed signal to pass through a fourth compensator, to an assist torque signal approximately proportional to a signal for assist torque calculation that is an addition result between a compensated steering torque signal obtained by causing the steering torque signal to pass through a first compensator and a compensated motor speed signal obtained by causing the motor speed signal to pass through a third compensator, and
in each of the first compensator, the second compensator, the third compensator, and the fourth compensator, at least two or more stages of low-order filters of which an order is 1 or 2 are connected in series.

6. The electric power steering control device according to Claim 5,

wherein the first compensator has a characteristic of approximately 0 dB at 0 Hz, and
the second compensator, the third compensator, and the fourth compensator have a characteristic of reducing a low frequency component.

7. The electric power steering control device according to Claim 5,
wherein all of the low-order filters constituting at least any one of the first compensator, the second compensator, the third compensator, and the fourth compensator have the same order.

8. The electric power steering control device according to Claim 5,
wherein all of the low-order filters constituting at least any one of the first compensator, the second compensator, the third compensator, and the fourth compensator have the same structure.

9. An electric power steering device comprising:

a torque sensor configured to determine the steering torque applied to a steering wheel by a user; and
the electric power steering control device according to any one of Claims 1 to 8,
wherein the output torque is controlled by the electric power steering control device based on the steering torque determined by the torque sensor.

10. A vehicle comprising:

a vehicle speed determination unit configured to determine a speed of the vehicle; and
the electric power steering device according to Claim 9 in which the output torque is controlled based on the vehicle speed determined by the vehicle speed determination unit and the steering torque.

11. An electric power steering control system comprising:

a steering wheel;
a motor configured to output assist torque based on a steering torque signal from a torque sensor configured to determine steering torque applied to the steering wheel by a user; and
a control device configured to control output torque of the motor,
wherein the control device controls the output torque by using, as a current command corresponding to a command value of the output torque, a signal obtained by adding a correction signal obtained by causing the steering torque signal to pass through a second compensator to an assist torque signal approximately proportional to a compensated steering torque signal obtained by causing the steering torque signal to pass through a first compensator, and
in each of the first compensator and the second compensator, at least two or more stages of low-order filters of which an order is 1 or 2 are connected in series.

12. An electric power steering control system comprising:

a steering wheel;
a motor configured to output assist torque based on a steering torque signal from a torque sensor configured to determine steering torque applied to the steering wheel by a user and a motor speed signal; and
a control device configured to control output torque of the motor,
wherein the control device controls the output torque by using, as a current command corresponding to a command value of the output torque, a signal obtained by adding a combined correction signal, which is an addition result between a torque-based correction signal obtained by causing the steering torque signal to pass through a second compensator and a motor speed-based correction signal obtained by causing the motor speed signal to pass through a fourth compensator, to an assist torque signal approximately proportional to a signal for assist torque calculation that is an addition result between a compensated steering torque signal obtained by causing the steering torque signal to pass through a first compensator and a compensated motor speed signal obtained by causing the motor speed signal to pass through a third compensator, and
in each of the first compensator, the second compensator, the third compensator, and the fourth compensator, at least two or more stages of low-order filters of which an order is 1 or 2 are connected in series.

FIG. 1

FIG. 2

FIG. 3

FIG. 4

# FIG. 5

# FIG. 6

FIG. 7

FIG. 8

FIG. 9

FIG. 10

FIG. 11

# FIG. 12

EP 4 714 787 A1

# FIG. 13

VEHICLE — 200

ELECTRIC POWER STEERING DEVICE — 100

51

53a

22

53

2

1

53

23

CONTROL DEVICE

53b

57

55

56

54

30

VEHICLE SPEED DETERMINATION UNIT

## INTERNATIONAL SEARCH REPORT

| | International application No. |
|---|---|
| | **PCT/JP2023/018191** |

| A. | CLASSIFICATION OF SUBJECT MATTER |
|---|---|

**B62D 6/00**(2006.01)i; **B62D 5/04**(2006.01)i; *B62D 101/00*(2006.01)n; *B62D 119/00*(2006.01)n
FI: B62D6/00; B62D5/04; B62D119:00; B62D101:00

According to International Patent Classification (IPC) or to both national classification and IPC

| B. | FIELDS SEARCHED |
|---|---|

Minimum documentation searched (classification system followed by classification symbols)

B62D6/00; B62D5/04; B62D101/00; B62D119/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2006-117223 A (NISSAN MOTOR CO., LTD.) 11 May 2006 (2006-05-11) paragraphs [0175]-[0211], fig. 53, 58 | 1-12 |
| A | WO 2012/160850 A1 (MITSUBISHI ELECTRIC CORPORATION) 29 November 2012 (2012-11-29) paragraphs [0077]-[0081], fig. 19, 20 | 1-12 |
| A | JP 2018-2013 A (DENSO CORPORATION) 11 January 2018 (2018-01-11) paragraphs [0014]-[0057], fig. 1, 9 | 1-12 |
| A | JP 4412006 B2 (JTEKT CORP.) 10 February 2010 (2010-02-10) paragraphs [0013]-[0021], fig. 1, 2 | 1-12 |
| A | JP 2009-214711 A (HONDA MOTOR CO., LTD.) 24 September 2009 (2009-09-24) paragraphs [0011]-[0038], fig. 1, 5 | 1-12 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 July 2023** | **01 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/018191**

| Patent document cited in search report | | | Publication date (day/month/year) | Patent family member(s) | | | Publication date (day/month/year) |
|---|---|---|---|---|---|---|---|
| JP | 2006-117223 | A | 11 May 2006 | US | 2006/0069481 | A1 | |
| | | | | paragraphs [0314]-[0353], fig. 53-58B | | | |
| | | | | EP | 1640246 | A2 | |
| WO | 2012/160850 | A1 | 29 November 2012 | US | 2014/0058630 | A1 | |
| | | | | paragraphs [0110]-[0114], fig. 19, 20 | | | |
| | | | | EP | 2716522 | A1 | |
| | | | | CN | 103562049 | A | |
| JP | 2018-2013 | A | 11 January 2018 | US | 2018/0009465 | A1 | |
| | | | | paragraphs [0036]-[0131], fig. 1-9B | | | |
| | | | | DE | 102017211068 | A1 | |
| | | | | CN | 107571911 | A | |
| JP | 4412006 | B2 | 10 February 2010 | US | 2007/0198153 | A1 | |
| | | | | paragraphs [0026]-[0043], fig. 1, 2 | | | |
| | | | | WO | 2005/085041 | A1 | |
| | | | | EP | 1741616 | A1 | |
| JP | 2009-214711 | A | 24 September 2009 | (Family: none) | | | |

Form PCT/ISA/210 (patent family annex) (January 2015)

**EP 4 714 787 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5642272 B
- JP 5160663 B
- JP 4412006 B